# EUROPÄISCHE PATENTSCHRIFT

(11) **EP 3 334 953 B1**
(45) Veröffentlichungstag und Bekanntmachung des Hinweises auf die Patenterteilung: **02.10.2024**
(21) Anmeldenummer: 16753889.1
(22) Anmeldetag: 12.08.2016
(51) Int. Cl.: F16F 15/02

(54) **VORRICHTUNG ZUR MECHANISCHEN KOPPLUNG WENIGSTENS EINES SCHWINGEND GELAGERTEN KÖRPERS**
DEVICE FOR MECHANICALLY COUPLING A MOVABLY MOUNTED BODY
DISPOSITIF POUR COUPLER MÉCANIQUEMENT UN CORPS MONTÉ AMOVIBLE

(30) Priorität: 14.08.2015 DE 102015215554
(43) Veröffentlichungstag der Anmeldung: 20.06.2018
(73) Patentinhaber: Fraunhofer-Gesellschaft zur Förderung der angewandten Forschung e.V., 80686 München (DE)
(72) Erfinder: HANSMANN, Jan, 64287 Darmstadt (DE); WOLTER, Stefan, 16321 Bernau (DE); SEIPEL, Björn, 61197 Florstadt (DE); KAAL, William, 64291 Darmstadt (DE); HEROLD, Sven, 64823 Groß-Umstadt (DE)
(74) Vertreter: Rösler, Uwe
(86) Internationale Anmeldenummer: PCT/EP2016/069239
(87) Internationale Veröffentlichungsnummer: WO 2017/029217

(56) Entgegenhaltungen:
- WO-A1-02/087909
- WO-A1-2009/064640
- DE-A1- 102009 047 134
- DE-C1- 19 958 178

## Beschreibung

### Technisches Gebiet

Die Erfindung bezieht sich auf eine Vorrichtung zur mechanischen Kopplung eines schwingend gelagerten Körpers mit einem ruhenden Körper mit den Merkmalen des Oberbegriffs des Anspruchs 1.

### Stand der Technik

Gattungsgemäße Vorrichtungen dienen vorzugsweise als mechanische Lager im Maschinen-, Fahrzeug- und Gerätebau und vermögen aufgrund ihrer dynamischen Eigenschaften das Bewegungs- bzw. Schwingungsverhalten eines beweglich gelagerten Körpers, der über das Lager mit wenigstens einem zweiten Körper mechanisch gekoppelt ist, zu beeinflussen. Unter dem Begriff des "beweglich gelagerten Körpers" sind beliebige Bauteile, Bauteilgruppen, Strukturen oder Komponenten zu verstehen, die zumeist auf einer ruhenden Tragstruktur, die dem zweiten Körper entsprechen, beweglich oder vorzugsweise schwingend lagern. Zu Zwecken einer Beeinflussung der Bewegung zumindest des beweglich gelagerten Körpers verfügt das Lager über Dämpfungseigenschaften, durch die die Körperbewegung des beweglichen Körpers durch eine ihrer Bewegungsrichtung entgegen gerichtete Kraft gebremst wird. Diese Kraft ist abhängig von der relativen Bewegungsgeschwindigkeit beider über das Lager mechanisch miteinander gekoppelter Körper und vermag dem sich relativ zueinander bewegenden Zweikörper-System Energie zu entziehen, wobei Energie dissipiert wird. Je nach technisch-konstruktiver Ausbildung des dämpfend wirkenden Lagers beruht der in Erscheinung tretende Dämpfungseffekt auf unterschiedlichen physikalischen Wirkmechanismen, wie beispielsweise der Reibung zwischen Oberflächen oder innerhalb eines Fluids oder innerhalb elastomerer Materialien, um nur einige Dämpfungseffekte zu nennen.

Neben den dämpfenden Lagereigenschaften einer mechanischen Kopplung zwischen zwei Körpern ist die mechanische Kopplung zudem auch durch deren Steifigkeit charakterisierbar, die den Widerstand gegen eine elastische Verformung der mechanischen Kopplung beschreibt. Die Steifigkeit verursacht eine Rückstellkraft, die von den elastischen Eigenschaften der mechanischen Kopplung ausgehend von einer von außen wirkenden Kraft abhängig ist.

Zur Beschreibung und Beeinflussung sämtlicher dynamischer Eigenschaften eines beweglich über eine mechanische Kopplung gelagerten Körpers bedarf es daher sowohl die Steifigkeits- als auch Dämpfungseigenschaften der mechanischen Kopplung zu berücksichtigen. Je nach Ausbildung der mechanischen Kopplung können Dämpfungs- oder Steifigkeitseigenschaften dominieren.

Sind beispielsweise zwei Körper über einen metallischen Biegebalken miteinander verbunden, so ist zweifelsohne die mechanische Kopplung im Wesentlichen durch die Steifigkeit des Biegebalkens charakterisiert. Gleichwohl derartige Biegebalken grundsätzlich auch über Dämpfungseigenschaften verfügen treten diese nur in einem sehr geringen Umfang in Erscheinung, bedingt beispielsweise durch materialinhärente Reibungseffekte bei Verformung des Biegebalkens oder durch den Luftwiderstand, dem der schwingende Biegebalken ausgesetzt ist. Auch kann eine mögliche Schallabstrahlung zur Schwingungsdämpfung beitragen.

Demgegenüber dominieren beispielsweise bei einem hydraulischen Dämpfer, der typischerweise zwei über eine Drosselöffnung fluidisch miteinander kommunizierende Kammern vorsieht, die mit einem Hydraulik Fluid teilweise befüllt sind, die Dämpfungseigenschaften gegenüber der dem Dämpfersystem dennoch innewohnenden Steifigkeit, die konstruktiv bedingt den Bauteilen sowie der dem Fluid innewohnenden Steifigkeit geschuldet ist.

Die weiteren Betrachtungen und Ausführungen sind auf eine mechanische Kopplung zwischen zwei Körper gerichtet, deren dynamische Kopplungs-Eigenschaften von der Dämpfung dominiert wird gegenüber einer systemimmanenten Kopplungs-Steifigkeit.

Wie eingangs erläutert sind als Dämpfungselemente konzipierte, mechanischen Kopplungen zwischen zwei Körpern durch eine geschwindigkeitsabhängige Kraft charakterisierbar, mit der den sich über das Dämpfungselement miteinander verbundene, relativ beweglichen Körpern kinetische Energie entzogen wird, wodurch letztlich der jeweils beweglich gegenüber dem ruhend gelagerten Körper beruhigt wird.

Je nach Einsatzzweck der mechanisch miteinander gekoppelten Körper kann es von Vorteil sein, den Zusammenhang zwischen der Dämpfungskraft und der Bewegungsgeschwindigkeit zu verändern, das heißt die Dämpfungseigenschaften variabel einzustellen.

Dämpfungselemente mit einer variabel einstellbaren Dämpfungscharakteristik stellen zum Beispiel an sich bekannte hydraulische oder pneumatische Dämpfungselemente dar, die einen durchströmten Fluidkanal einschließen, dessen Kanalquerschnitt einstellbar variierbar ist. Aus der DE 3721811 A1 geht in diesem Zusammenhang ein Motorlager mit hydraulischer Dämpfung hervor, bei dem zwischen zwei flüssigkeitsgefüllten Räumen eine Trennwand angeordnet ist, die von einer Drosselöffnung durchdrungen ist. Im Bereich der Drosselöffnung ist zudem eine Lochblende vorgesehen, deren Öffnungsweite zwischen einem Kleinstmaß und einem Größtmaß mittels einer Signal-betätigbaren Verstelleinrichtung verstellbar ist.

Ein weiteres Prinzip zur variablen Einstellung der Dämpfung ist der Druckschrift DE 102 14 325 A1 zu entnehmen, die ein Hydrolager beschreibt, das zwei voneinander getrennte, über einen sogenannten Überstromkanal fluidisch miteinander verbundene Fluidkammern vorsieht. Längs des Überstromkanals ist eine Magnetkraft unterstützte, bidirektional auslenkbare Magnetkolbenanordnung eingebracht, die je nach Auslenkung eine zusätzliche Krafteinwirkung längs des, in erster Näherung inkompressiblen Fluides innerhalb des Überstromkanals auszuüben vermag, wodurch die Dämpfungseigenschaften des Hydrolagers aktiv beeinflussbar sind.

Sämtliche Fluid enthaltende Dämpfungssysteme erfordern einen erhöhten konstruktiven und kostenrelevanten Aufwand, bedingt durch nötige fluidische Abdichtungsmaßnahmen. Zudem unterliegen derartige fluidbasierte Dämpfungselemente einer Erhöhung der dynamischen Steifigkeit mit zunehmenden Schwingungsfrequenzen des auf das Dämpfungssystem einwirkenden, beweglich im Sinne von schwingend gelagerten Körpers.

Des Weiteren sind fluidbasierte Dämpfungselemente bekannt, deren Dämpfungseigenschaften durch Variation der Viskosität des Fluides und damit verbunden des Fließwiderstandes eines von einem Kammersystem umschlossenen Fluides einstellbar sind. Hierzu werden elektrorheologische oder magnetorheologische Fluide eingesetzt, deren Viskosität durch Wechselwirkung mit elektrischen oder magnetischen Feldern veränderbar ist. Neben dem bereits erwähnten konstruktiven Aufwand wegen des fluidbedingten Abdichtens, haftet magnethreologischen sowie elektrorheologischen Fluiden zudem das Problem der Sedimentation elektrisch leitfähiger oder magnetischer Partikel an. Zudem besteht auch hier das Problem der Erhöhung der dynamischen Steifigkeit hin zu hohen Schwingungsfrequenzen.

In einem Fachbuch Artikel von Heißing et al., Fahrwerkhandbuch, 4. Auflage, 2013, S. 75 ff, ISBN 978-3-658-01991-4, sind Ausführungen zu einem Schwingungsdämpfer für Kraftfahrzeuge zu entnehmen, die für eine Dämpferauslegung einen optimalen Kompromiss zwischen harter Sicherheitsdämpfung und weicher Komfortdämpfung anstreben. Hierzu ist die Radaufhängung über zwei separate Kraftpfade mit der Karosserie verbunden, längs eines ersten Kraftpfades ist ein Dämpferelement in Serie mit dem Rad angeordnet und längs des zweiten Kraftpfades ist eine Federsteifigkeit vorgesehen.

Die Druckschrift EP 2 615 325 A1 beschreibt ein aktives Lager das zwei parallele Kraftpfade zwischen zwei Körper vorsieht. Längs des einen Kraftpfades sind in serieller Reihenfolge ein einstellbares Dämpfungselement, ein elastisch verformbares Element, eine Getriebeeinheit sowie ein Linearaktor vorgesehen, die parallel zum zweiten Kraftpfad angeordnet sind, längs dem ein elastisches Abstützelement angeordnet ist.

Die Druckschrift DE 10 2009 047 134 A1 offenbart eine Radaufhängung für ein Fahrzeug mit einem zwischen einem Fahrzeugrad und der Fahrzeugkarosserie angeordneten Federsystem, das ein Federelement aufweist, dessen Federsteifigkeit über eine Stelleinrichtung einstellbar ist.

Die Druckschrift DE 10 2009 015 166 A1 beschreibt eine adaptive Aggregatelagerung für Kraftfahrzeuge zur Variation deren Dämpfung und Steifigkeit. Vorgesehen sind Stellglieder sowohl zur Einstellung von Dämpfereinheiten als auch von Steifigkeiten.

Die Druckschrift DE 10 2008 057 577 A1 offenbart ein Elastomer-Lager mit einem Feder-/Dämpferkörper, dessen Dehnfähigkeit durch Einwirken wenigstens eines Stützkörpers beeinflussbar ist. 1

Aus der WO 02/087909 A1 ist eine Vorrichtung mit den Merkmalen des Oberbegriffs des Anspruchs 1 bekannt.

### Darstellung der Erfindung

Der Erfindung liegt die Aufgabe zugrunde eine Vorrichtung zur mechanischen Kopplung eines schwingend gelagerten Körpers längs eines ersten Kraftpfades, längs dem wenigstens eine variabel einstellbare Steifigkeit enthalten ist, mit einem ruhenden Körper, derart weiterzubilden, dass die gegenüber der Steifigkeit der mechanischen Kopplung dominierenden Dämpfungseigenschaften der beide Körper mechanisch miteinander verbindenden Kopplung variabel, d.h. individuell einstellbar sein soll, wobei das jeweils eingestellte Dämpfungsverhalten über einen großen Frequenzbereich, insbesondere zu hohen Frequenzen konstant bzw. weitgehend konstant bleiben soll. Die lösungsgemäße Vorrichtung soll überdies mechanisch einfach, kostengünstig und möglichst wartungsfreundlich sein, so gilt es insbesondere auf fluidbasierte Dämpfungssysteme zu verzichten.

Die Lösung der der Erfindung zugrundeliegenden Aufgabe ist im Anspruch 1 angegeben. Den Erfindungsgedanken in vorteilhafter Weise weiterbildende Merkmale sind Gegenstand der Unteransprüche sowie der weiteren Beschreibung unter Bezugnahme auf konkrete Ausführungsbeispiele zu entnehmen.

Die lösungsgemäße Vorrichtung zur Beeinflussung einer dynamischen Eigenschaft wenigstens eines beweglich gelagerten Körpers zweier wenigstens über eine variabel einstellbare Steifigkeit längs eines ersten Kraftpfades mechanisch gekoppelter Körper zeichnet sich dadurch aus, dass längs des ersten Kraftpfades ein Dämpfungselement mit konstanten Dämpfungseigenschaften in Serie mit der variabel einstellbaren Steifigkeit mittel- oder unmittelbar gekoppelt ist. Beide Körper sind über einen parallel zum ersten Kraftpfad verlaufenden, zweiten Kraftpfad mechanisch mittel- oder unmittelbar gekoppelt, längs dem wenigstens eine einstellbare Steifigkeit eingebracht ist, wobei die Dämpfungseigenschaft des Dämpfungselementes und die einstellbaren Steifigkeiten derart aufeinander abgestimmt und ausgebildet sind, dass eine der Vorrichtung zur mechanischen Kopplung zugeordnete Dämpfungseigenschaft ausschließlich durch die einstellbaren Steifigkeiten variierbar ist.

Die jeweils längs des ersten und zweiten Kraftpfades angeordnete, variabel einstellbare Steifigkeit ist unter ausschließlicher Nutzung eines rein mechanischen Kopplungssystems realisiert, sodass keinerlei Abdichtungsprobleme existieren, wie sie vorstehend bei den erläuterten fluidbasierten hydraulischen oder pneumatischen Elementen mit dynamischen Eigenschaften vorhanden sind. Dies eröffnet die neuartige Möglichkeit eines variabel einstellbaren Dämpfungssystems, dessen Dämpfungsverhalten ausschließlich durch Änderung einer variabel einstellbaren Steifigkeit variabel einstellbar ist.

Wird in einer bevorzugten Ausführungsform ein Elastomer als Dämpfungselement eingesetzt, so verfügt die lösungsgemäße Vorrichtung über eine variabel einstellbare Dämpfung, deren Dämpfungsverhalten qualitativ weitestgehend dem eines Elastomers entspricht, das heißt das Dämpfungsverhalten bleibt bei einer vorgegebenen Dämpfung selbst bei sich zu höheren Frequenzen ändernden Schwingungsfrequenzen des jeweils schwingend gelagerten Körpers weitestgehend konstant. Mit anderen Worten bildet die lösungsgemäße Vorrichtung in nahezu idealer Weise die weitgehend frequenzunabhängige Dämpfungscharakteristik eines Elastomers nach, wobei der Dämpfungsgrad ohne jegliche Änderung der in der Vorrichtung enthaltenen Dämpfungselemente mit Hilfe der variabel einstellbaren Steifigkeiten variabel einstellbar ist. Die lösungsgemäße Vorrichtung verfügt somit, wie die nachstehenden Erläuterungen unter Bezugnahme auf konkrete Ausführungsbeispiele zeigen werden nach entsprechender Einstellung eines konkreten Dämpfungswertes, bzw. Dämpfungsgrades, der auch als Verlustwinkel bezeichnet wird, über ein variabel einstellbares elastomeres Dämpfungsverhalten, das heißt die Dämpfung bzw. der Verlustwinkel bleibt über einen großen Frequenzbereich konstant.

Die der vorstehend erläuterten Vorrichtung zugrundeliegende, lösungsgemäße Erkenntnis spiegelt sich auch in einem nicht beanspruchten Verfahren zur Beeinflussung der dynamischen Eigenschaft wenigstens eines beweglich gelagerten Körpers zweier wenigstens über eine variabel einstellbare Steifigkeit längs eines Kraftpfades mechanisch gekoppelter Körper, wider, bei dem längs des einen Kraftpfades oder längs wenigstens eines weiteren, beide Körper miteinander mechanisch koppelnden Kraftpfades wenigstens ein die dynamischen Eigenschaften der mechanischen Kopplung längs des wenigstens einen Kraftpfades beeinflussendes Dämpfungselement eingebracht wird, dessen Dämpfungseigenschaften die dynamischen Eigenschaften der mechanischen Kopplung dominiert. Es handelt sich somit um eine überwiegend durch dämpfende Eigenschaften charakterisierbare mechanische Kopplung zwischen dem ersten und zweiten Körper. Dabei wird zur Beeinflussung des Dämpfungsverhaltens nicht das wenigstens eine Dämpfungselement herangezogen, sondern zur variablen Beeinflussung der Dämpfungseigenschaften der mechanischen Kopplung ausschließlich die Steifigkeit längs des einen Kraftpfades variiert.

Aus diesem Grunde eignet sich die lösungsgemäß ausgebildete mechanische Kopplung zwischen den beiden Körpern, die relativ zueinander beweglich gelagert sind, als variabel einstellbares Dämpfungselement, dessen Dämpfungsverhalten durch Änderung der variabel einstellbaren Steifigkeit vorgebbar einstellbar ist. Weitere Einzelheiten sind der weiteren Beschreibung unter Bezugnahme auf die folgenden Ausführungsbeispiele zu entnehmen.

### Kurze Beschreibung der Erfindung

Es zeigen:
- Fig. 1a, b: schematisierte Darstellungen einer Schaltungstopologie für ein Dämpfungssystem mit variabel einstellbarer Dämpfung,
- Fig. 2: Schaltungstopologie für ein bevorzugtes Ausführungsbeispiel für eine Vorrichtung mit variablen einstellbarer Dämpfung,
- Fig. 3 a, b: Diagramme zur Illustration des Dämpfungsverhaltens,
- Fig. 4: Schaltungstopologie einer lösungsgemäßen Vorrichtung mit Wegsensor basierten Regelung sowie
- Fig. 5: Schaltungstopologie wie zu Figur 5 ergänzt durch eine sensorische Kraftmessung.

### Wege zur Ausführung der Erfindung, gewerbliche Verwendbarkeit

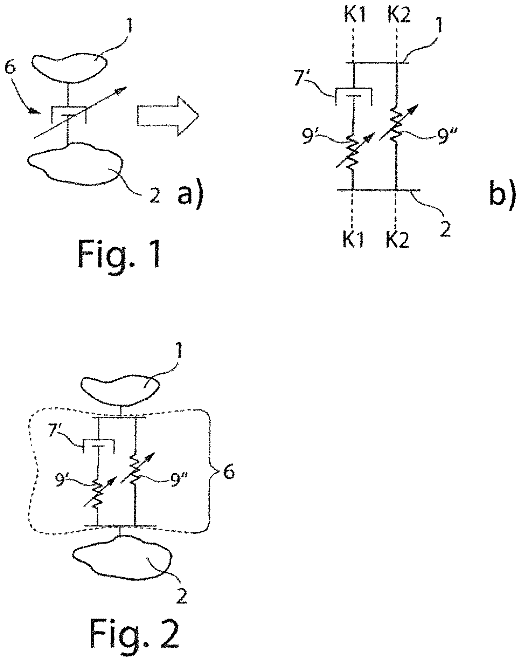

Die Figur 1a illustriert eine mechanische Kopplungstopologie zwischen zwei Körper 1, 2, wobei sich die mechanische Kopplung durch dämpfende Eigenschaften auszeichnet, das heißt die Dämpfungswirkung dominiert gegenüber der ebenfalls der mechanischen Kopplung innewohnenden Steifigkeit.

Zudem zeichnet sich das Kopplungssystem durch variabel einstellbare dynamische Eigenschaften aus, d.h. das Kopplungssystem verfügt übervariabel einstellbare Dämpfungseigenschaften, die durch das Dämpfungssystem 6 illustriert sein sollen. Es sei zudem angenommen, dass der Körper 1 gegenüber dem ruhenden Körper 2 schwingend gelagert ist.

In der in Figur 1b illustrierten Ausführungsform, auf die im Weiteren mehrfach Bezug genommen wird, sind beide Körper 1, 2 über zwei Kraftpfade K1, K2 mechanisch miteinander gekoppelt. Längs des ersten Kraftpfades K1 ist ein erstes Dämpfungselement 7' vorgesehen, das in Serie mit einer variabel einstellbaren Steifigkeit 9' gekoppelt ist. Längs des zweiten Kraftpfades K2 ist eine Einheit mit dynamischen Eigenschaften in Form einer variabel einstellbaren Steifigkeit 9" vorgesehen. Durch die längs des zweiten Kraftpfades K2 eingebrachte variabel einstellbare Steifigkeit 9" können Kompensationen bezüglich des veränderlichen Steifigkeitsverhalten der längs des ersten Kraftpfades angeordneten, einstellbaren Steifigkeit 9' vorgenommen werden, mit der das Dämpfungsverhalten der mechanischen Kopplung zwischen beiden Körper variabel einstellbar ist.

Der illustrierten Kopplungstopologie liegt das Prinzip zugrunde, dass ihre dominierenden Dämpfungseigenschaften variabel vorgebbar einstellbar sind durch ausschließliche Variation mindestens einer in der Kopplungstopologie eingebrachten variabel einstellbaren Steifigkeit 9' bzw. 9". Das Dämpfungselement 7' verfügt über konstante Dämpfungseigenschaften und ist vorzugsweise aus einem Elastomerkörper oder aus einer, mindestens einen Elastomerkörper aufweisende Dämpfungseinheit ausgebildet.

Die Besonderheit der erläuterte Kopplungstopologie besteht darin, dass ihre resultierenden Dämpfungseigenschaften qualitativ denen des verwendeten Dämpfungselementes entsprechen, dabei in Ihrem Betrag quantitativ aber einstellbar sind, ohne dabei die Steifigkeitseigenschaften der Kopplungstopologie zu verändern. Es wird eine weitestgehend unabhängige Einstellung von Steifigkeits- und Dämpfungseigenschaften ermöglicht. Verwendet man beispielsweise ein Elastomer als Dämpfungseinheit oder eine mindestens einen Elastomerkörper aufweisende, Dämpfungseinheit, so wird es möglich die über einen weiten Bereich frequenzunabhängigen Dämpfungseigenschaften des Elastomers für die gesamte Kopplungstopologie beizubehalten, gleichzeitig aber eine unabhängige Verstellung von Steifigkeit und Verlustwinkel zu ermöglichen.

Figur 2 illustriert die bevorzugte Ausführungsform gemäß Figur 1b im Detail. Der beweglich bzw. schwingend gelagerte Körper 1 sowie der vorzugsweise ruhend gelagerte Körper 2 sind über das lösungsgemäße variabel einstellbare Dämpfungssystem 6 miteinander verbunden bzw. gekoppelt. Das in seinen Dämpfungseigenschaften variabel einstellbare Dämpfungssystem 6 sieht zwei in Reihe geschaltete, beide Körper 1, 2 längs des ersten Kraftpfades K1 miteinander verbindende Elemente vor, nämlich ein Dämpfungselement 7' und eine einstellbare Steifigkeit 9' vor. Parallel zum ersten Kraftpfad K1 ist zusätzlich ein Steifigkeitselement 9" angeordnet, dessen Steifigkeit einstellbar bzw. veränderbar ist. Die einstellbaren Steifigkeitselemente 9' und 9" sind jeweils durch eine untere und durch eine obere Grenze Ihres Steifigkeitsverstellbereiches gekennzeichnet, diese sind von der verwendeten Ausbildungsform der einstellbaren Steifigkeitselemente 9' und 9" und deren Auslegung abhängig. Die Veränderbarkeit der Steifigkeit ist je nach konstruktiver Auslegung der Steifigkeit variabel, das heißt stufenlos oder in diskreten Schritten bzw. Stufen einstellbar.

Eine bevorzugte Ausbildungsform für die variabel einstellbare Steifigkeit 9" ist in der Druckschrift DE 10 2011 015 798 B4 offenbart. Die bekannte variabel einstellbare Steifigkeit koppelt zwei Komponenten, eine erste und eine zweite Komponente, längs wenigstens einer Wirkrichtung, längs der zumindest eine Komponente schwingend gelagert ist und weist ein Flächenelement auf mit einer Flächenober- und einer Flächenunterseite sowie einer Flächenlängserstreckung, das formstabil in und elastisch lateral zur Flächenlängserstreckung ist. An der ersten Komponente sind n ≥ 2 Kontaktmittel raumfest angebracht, über die die erste Komponente an n ≥ 2 erste Kontaktstellen mit der Flächenunterseite und/oder Flächenoberseite des Flächenelementes in Berührung tritt. An der zweiten Komponente sind ebenfalls n ≥ 2 Kontaktmittel raumfest angebracht, über die die zweite Komponente an n ≥ 2 zweite Kontaktstellen mit der Flächenunterseite und/oder Flächenoberseite des Flächenelementes in Berührung tritt. Beide Komponenten sind relativ zueinander um eine orthogonal zur Flächenlängserstreckung orientierte Raumachse, die mit der wenigstens einen Wirkrichtung längs der zumindest eine Komponente schwingend gelagert ist zusammenfällt, drehbar angeordnet, so dass bei Verdrehung die Flächensteifigkeit des Flächenelementes variierbar ist.

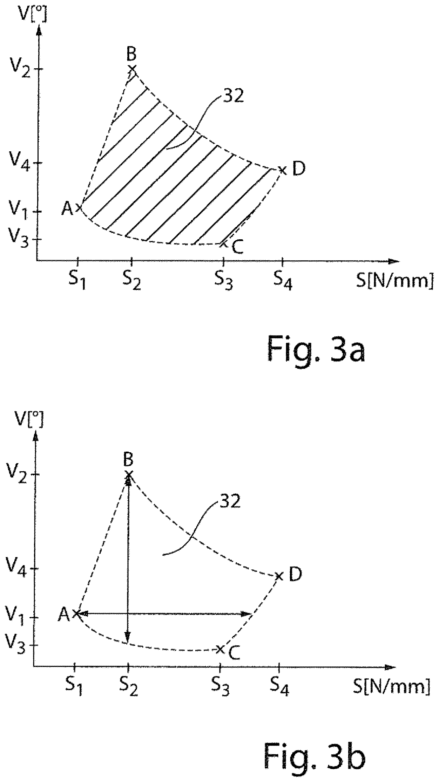

Das lösungsgemäß ausgebildete einstellbare Dämpfungssystem 6 weist sowohl ein wegabhängiges, d.h. elastisches, sowie auch geschwindigkeitsabhängiges, d.h. dämpfendes, dynamisches Verhalten auf, wobei das geschwindigkeitsabhängige Dämpfungsverhalten dominiert. Grundsätzlich ist es möglich, das einstellbare Dämpfungssystem 6 auch als gedämpftes Element mit einstellbarer Steifigkeit zu verwenden, dies wird in Figur 3b erläutert.

Das Dämpfungsverhalten, das sich auch über den so genannten Verlustwinkel charakterisiert, sowie das Steifigkeitsverhalten sind für das lösungsgemäß ausgebildete Dämpfungssystem 6 in den in den Figuren 3 a, b illustrierten Diagrammen illustriert. Längs der Abszisse ist jeweils die Steifigkeit [N/mm] (S) angetragen, längs der Ordinate ist der Verlustwinkel [°] (V) dargestellt.

Figur 3a zeigt eine Fläche 32, die den gesamten Einstellbereich des einstellbaren Dämpfungssystems 6 charakterisiert. Dieser wird durch die vier Eckpunkte A, B, C, D aufgespannt. Am Eckpunkt A hat das einstellbare Dämpfungssystem 6 die Steifigkeit S1 und den Verlustwinkel V1. Am Eckpunkt B hat das einstellbare Dämpfungssystem 6 die Steifigkeit S2 und den Verlustwinkel V2. Am Eckpunkt C hat das einstellbare Dämpfungssystem 6 die Steifigkeit S3 und den Verlustwinkel V3. Am Eckpunkt D hat das einstellbare Dämpfungssystem 6 die Steifigkeit S4 und den Verlustwinkel V4. Eckpunkt A stellt sich ein, wenn die einstellbaren Steifigkeitselemente 9' und 9" jeweils auf deren minimal mögliche Steifigkeit eingestellt sind. Belässt man nun das Steifigkeitselement 9" auf dessen minimal möglicher Steifigkeit und verstellt das Steifigkeitselement 9' auf dessen maximal mögliche Steifigkeit, so stellen sich für das einstellbare Dämpfungssystem 6 die Eigenschaften am Eckpunkt B ein. Belässt man nun das Steifigkeitselement 9' auf dessen maximal möglicher Steifigkeit und verstellt das Steifigkeitselement 9" auf dessen maximal mögliche Steifigkeit, so stellen sich für das einstellbare Dämpfungssystem 6 die Eigenschaften am Eckpunkt D ein. Belässt man nun das Steifigkeitselement 9" auf dessen maximal möglicher Steifigkeit und verstellt das Steifigkeitselement 9' auf dessen minimal mögliche Steifigkeit, so stellen sich für das einstellbare Dämpfungssystem 6 die Eigenschaften am Eckpunkt C ein. Verändert man die Eigenschaft nur eines einstellbaren Steifigkeitselements 9' oder 9", so verändern sich die Steifigkeits- und Dämpfungseigenschaften des einstellbaren Dämpfungssystems 6 abhängig von einander.

Figur 3b zeigt eine Fläche 32, die den gesamten Einstellbereich des einstellbaren Dämpfungssystems 6 charakterisiert und illustriert zudem zwei Beispiele zur unabhängigen Verstellung der Steifigkeits- und Dämpfungseigenschaften. Verändert man, ausgehend vom Eckpunkt B, die Eigenschaften der beiden einstellbaren Steifigkeitselemente 9' und 9" gemeinsam, so ist es möglich bei konstanter Steifigkeit S2 die Dämpfung des einstellbaren Dämpfungselements 6 einzustellen. Verändert man, ausgehend vom Eckpunkt A, die Eigenschaften der beiden einstellbaren Steifigkeitselemente 9' und 9" gemeinsam, so ist es möglich bei konstantem Verlustwinkel V1 die Steifigkeit des einstellbaren Dämpfungselements 6 einzustellen.

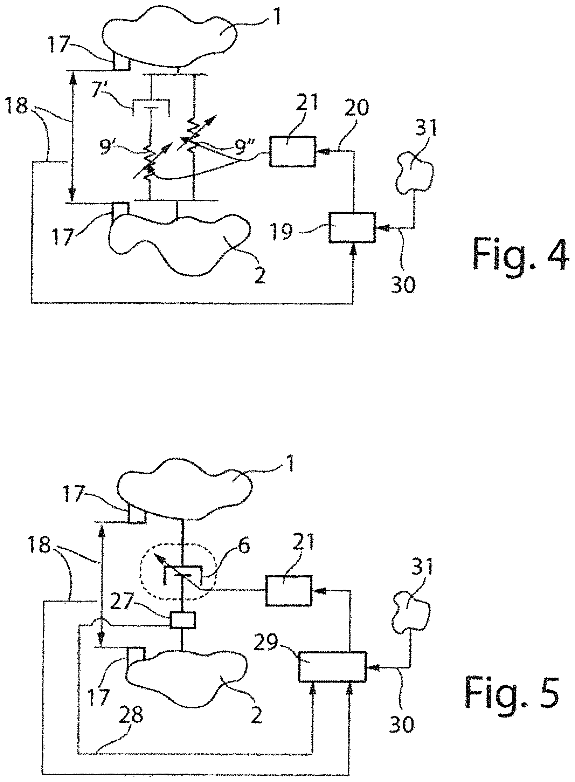

Das einstellbare Dämpfungssystem ist gemäß des erläuternden Beispiels in Figur 4 in vorteilhafter Weise mit einer Regelung zu kombinieren, mit der die Steifigkeiten 9' und 9" aktorisch einstellbar sind, wodurch das Dämpfungsverhalten und das Steifigkeitsverhalten des einstellbaren Dämpfungssystems regelbar ist. Zur sensorischen Weggrößenerfassung der jeweils beweglich bzw. schwingend zueinander gelagerten Körper 1 und 2 ist eine Sensorik 17 vorgesehen, mit der es möglich ist, den Verstellweg, die Geschwindigkeit und/oder die Beschleunigung zwischen beiden Körpern 1, 2 zu erfassen. Die Sensorik 17 ist mit einer Regeleinheit 19 verbunden, die wiederum mit einer Aktorik 21 zur Verstellung der einstellbaren Steifigkeiten 9 in Verbindung steht.

Die Sensorik 17 erfasst beispielsweise eine Weggröße 18 zwischen beiden Körpern 1, 2. Gleichsam dienen relative Beschleunigungsgrößen oder Geschwindigkeitsgrößen zwischen beiden Körpern 1, 2 als sensorisch erfassbare Ist-Größen, die Regelung 19 zugrunde gelegt werden können. Der für die Regelung erforderliche Vergleichs-Sollwert kann innerhalb des Reglers 19 festgelegt sein oder als Soll-Signal 30 von einem Ursprung 31, beispielsweise in Form eines Regelungssystems oder einer Steuerung bereitgestellt werden.

In Figur 5 ist eine vorteilhafte Ergänzung des in Figur 4 illustrierten erläuternden Beispiels mit Regelungssystem dargestellt. In Ergänzung sieht das in Figur 5 illustrierte Ausführungsbeispiel einen zusätzlichen Kraftmesssensor 27 vor, der zwischen den Körpern 1 und 2 in Reihe mit dem ausgebildeten Dämpfungssystem 6 geschaltet ist. Die mit Hilfe der Wegmesssensorik 17 erfasste Weggröße 18 sowie das mit Hilfe des Kraftmesssensors 27 erfasste Kraftsignal 28 werden zu einem Regler 29 geführt, die beide Grundlage für die Ermittlung sowohl der Steifigkeit als auch des Verlustwinkels des einstellbaren Dämpfungselementes sind. Die auf diese Weise ermittelte Steifigkeit sowie auch der ermittelte Verlustwinkel werden mit Hilfe des Reglers 29 einem Soll-Signal 30 angepasst, der von Seiten eines Ursprunges 31, beispielsweise in Form eines weiteren Regelsystems oder einer Steuerung bereitgestellt wird.

### Bezugszeichenliste

- 1: Erster Körper
- 2: Zweiter Körper
- 6: Einstellbares Dämpfungselement
- 7': Dämpfungselement
- 9',9": Variabel einstellbare Steifigkeit
- 17: Wegsensor
- 18: Weggröße
- 19: Regler
- 20: Regelsignal
- 21: Aktorik
- 27: Kraftmessung
- 28: Kraftsignal
- 29: Regler
- 30: Soll-Signal
- 31: Ursprung
- 32: Fläche

## Patentansprüche

1. Vorrichtung zur mechanischen Kopplung eines schwingend gelagerten Körpers (1) mit einem ruhenden Körper (2), mit einem beide Körper (1, 2) koppelnden Dämpfungssystem (6), das über variabel einstellbare Dämpfungseigenschaften verfügt,
wobei das Dämpfungssystem (6) zwei parallel zueinander angeordnete Kraftpfade (K1, K2) besitzt, die jeweils über einen gemeinsamen Krafteinleitungspunkt beide Körper (1, 2) mechanisch miteinander koppeln,
**dadurch gekennzeichnet,**
**dass** der erste Kraftpfad (K1) aus einem Dämpfungselement (7') mit konstanten Dämpfungseigenschaften sowie einer in Serie mit dem Dämpfungselement (7') gekoppelten variabel einstellbaren Steifigkeit (9') besteht,
**dass** der zweite Kraftpfad (K2) aus einer einstellbaren Steifigkeit (9") besteht, dass die Dämpfungseigenschaft des Dämpfungselementes (7') und die einstellbaren Steifigkeiten (9', 9") derart aufeinander abgestimmt und ausgebildet sind, dass eine der Vorrichtung zur mechanischen Kopplung zugeordnete Dämpfungseigenschaft ausschließlich durch die einstellbaren Steifigkeiten (9', 9") variierbar ist, und dass jeweils die längs des ersten und zweiten Kraftpfades angeordnete, variabel einstellbare Steifigkeit unter ausschließlicher Nutzung eines rein mechanischen Kopplungssystems realisiert ist.

2. Vorrichtung nach Anspruch 1,
**dadurch gekennzeichnet, dass** das Dämpfungselement (7') längs des ersten Kraftpfades über eine erste starre Verbindungsstruktur mit der variabel einstellbaren Steifigkeit (9') mechanisch gekoppelt ist.

3. Vorrichtung nach einem der Ansprüche 1 oder 2,
**dadurch gekennzeichnet, dass** die variabel einstellbaren Steifigkeiten (9', 9") in diskreten Steifigkeitsstufen oder stufenlos einstellbar sind.

4. Vorrichtung nach einem der Ansprüche 1 bis 3,
**dadurch gekennzeichnet, dass** das Dämpfungselement (7') ein Elastomerkörper ist.

5. Vorrichtung nach einem der Ansprüche 1 bis 4,
**dadurch gekennzeichnet, dass** die längs des zweiten Kraftpfades (K2) angeordnete variabel einstellbare Steifigkeit (9") wenigstens ein elastisch verformbares Federelement aufweist, dessen Federhärte variabel einstellbar ist.

## Claims

1. Device for mechanically coupling an oscillatingly mounted body (1) to a stationary body (2), with a damping system (6) coupling both bodies (1, 2) and having variably adjustable damping properties, the damping system (6) having two force paths (K1, K2) arranged parallel to one another, which each couple both bodies (1, 2) mechanically to one another via a common force introduction point,
**characterized in that** the first force path (K1) consists of a damping element (7') with constant damping properties and a variably adjustable stiffness (9') coupled in series with the damping element (7'), that the second force path (K2) consists of an adjustable stiffness (9"), the damping characteristic of the damping element (7') and the adjustable stiffnesses (9', 9") are matched to one another and designed in such a way that a damping characteristic assigned to the device for mechanical coupling can be varied exclusively by the adjustable stiffnesses (9', 9"), and that the variably adjustable stiffness arranged along the first and second force path is realized using a purely mechanical coupling system.

2. Device according to claim 1,
**characterized in that** the damping element (7') is mechanically coupled to the variably adjustable stiffness (9') along the first force path via a first rigid connecting structure.

3. Device according to one of claims 1 or 2,
**characterized in that** the variably adjustable rigidities (9', 9") are adjustable in discrete rigidity steps or continuously.

4. Device according to one of claims 1 to 3,
**characterized in that** the damping element (7') is an elastomer body.

5. Device according to one of claims 1 to 4,
**characterized in that** the variably adjustable stiffness (9") arranged along the second force path (K2) has at least one elastically deformable spring element, the spring hardness of which is variably adjustable.

## Revendications

1. Dispositif pour l'accouplement mécanique d'un corps à montage oscillant (1) comportant un corps fixe (2), comportant un système d'amortissement (6) couplant les deux corps (1, 2), qui dispose de propriétés d'amortissement réglables de manière variable,
dans lequel le système d'amortissement (6) présente deux trajets de force (K1, K2) disposés parallèlement l'un à l'autre, dont chacun couple mécaniquement les deux corps (1, 2) l'un à l'autre par l'intermédiaire d'un point d'introduction de force commun,
**caractérisé en ce que**
le premier le trajet de force (K1) est constitué d'un élément d'amortissement (7') avec des propriétés d'amortissement constantes et une rigidité variable (9') couplée en série avec l'élément d'amortissement (7'),
**en ce que** le deuxième trajet de force (K2) est constitué d'une rigidité réglable (9"),
que les propriétés d'amortissement de l'élément d'amortissement (7') et les rigidités réglables (9', 9") sont coordonnées et conçues les unes avec les autres de telle sorte qu'une propriété d'amortissement attribuée au dispositif pour un couplage mécanique puisse être modifiée exclusivement par les rigidités réglables (9', 9"), et que dans chaque cas, la rigidité longitudinale réglable de manière variable disposée dans les premier et deuxième trajets de force est réalisée exclusivement au moyen d'un système de couplage purement mécanique.

2. Dispositif selon la revendication 1, **caractérisé en ce que** l'élément d'amortissement (7') le long du premier trajet de force est couplé mécaniquement par l'intermédiaire d'une première structure de liaison rigide avec une rigidité réglable de manière variable (9').

3. Dispositif selon l'une des revendications 1 ou 2, **caractérisé en ce que** les rigidités réglables de manière variable (9', 9") peuvent être réglées par niveaux de rigidité discrets ou en continu.

4. Dispositif selon une des revendications 1 à 3, **caractérisé en ce que** l'élément d'amortissement (7') est un corps en élastomère.

5. Dispositif selon une des revendications 1 à 4, **caractérisé en ce que** la rigidité réglable de manière variable (9'') disposée le long du deuxième trajet de force (K2) présente au moins un élément à ressort, dont la dureté du ressort est réglable de manière variable.
